# EUROPEAN PATENT APPLICATION

(11) **EP 4 579 982 A1**
(43) Date of publication of application: **02.07.2025**
(21) Application number: 24851095.0
(22) Date of filing: 08.08.2024
(51) Int. Cl.: H02J 3/36, H02J 3/38, H02M 7/06, H02M 7/483

(54) **PARALLEL-TYPE OFFSHORE WIND POWER DIRECT CURRENT TRANSMISSION SYSTEM, AND STARTING CONTROL METHOD AND APPARATUS**

(30) Priority: 10.08.2023 CN 202311002636
(71) Applicant: China Three Gorges Corporation Industrial Development (Beijing) Co., Ltd., Beijing 101199 (CN); China Three Gorges Corporation, Wuhan, Hubei 430010 (CN)
(72) Inventor: GOU, Lifeng, Beijing 101199 (CN); TANG, Bojin, Beijing 101199 (CN); WANG, Yifan, Beijing 101199 (CN); CHANG, Yong, Beijing 101199 (CN); WU, Qiren, Beijing 101199 (CN); ZHOU, Xingda, Beijing 101199 (CN); LV, Pengyuan, Beijing 101199 (CN); JIA, Na, Beijing 101199 (CN); WANG, Jinshi, Beijing 101199 (CN); GUO, Mingzhu, Beijing 101199 (CN); SHAN, Xiaohui, Beijing 101199 (CN); WU, Jinbo, Beijing 101199 (CN); QI, Shaobing, Beijing 101199 (CN); CHEN, Meifu, Beijing 101199 (CN); LI, Xiaotong, Beijing 101199 (CN)
(74) Representative: Bryn Aarflot AS
(86) International application number: PCT/CN2024/110671
(87) International publication number: WO 2025/031450

(57) **Abstract**

The present application relates to the technical field of offshore direct-current transmission, and provides a parallel offshore wind power direct-current transmission system, a starting control method and apparatus. The system comprises: an onshore power grid, an onshore converter station, an offshore converter station and an offshore wind farm; the onshore power grid is connected with the onshore converter station; the onshore converter station is connected with the offshore converter station, and the offshore converter station comprises an offshore auxiliary flexible direct-current converter valve and a diode valve which is connected in parallel with the offshore auxiliary flexible direct-current converter valve; a first bypass switch is connected between the offshore auxiliary flexible direct-current converter valve and one terminal of a direct-current side of the diode valve; a second bypass switch is connected between the offshore auxiliary flexible direct-current converter valve and the other terminal of the direct-current side of the diode valve; the offshore auxiliary flexible direct-current converter valve and the diode valve are respectively connected with the offshore wind farm. By means of the present application, the volume of the converter valve in the offshore converter station is reduced and the cost of converter valve is reduced.

## Description

### CROSS REFERENCE TO RELATED APPLICATION

The present application claims the priority of the Chinese patent application filed to China National Intellectual Property Administration, filed on August 10th, 2023, with the application number of 202311002636.5 and the invention name of "A PARALLEL OFFSHORE WIND POWER DIRECT-CURRENT TRANSMISSION SYSTEM, STARTING CONTROL METHOD AND APPARATUS", the entire contents of which are incorporated herein by reference.

### TECHNICAL FIELD

The present application relates to the technical field of offshore direct-current transmission, in particular relates to a parallel offshore wind power direct-current transmission system, a starting control method and apparatus.

### BACKGROUND

At present, the direct-current sending scheme of offshore wind power usually adopts a flexible direct-current transmission scheme based on Modular Multilevel Converter (MMC), the offshore converter station of this scheme has a large platform and high investment cost. In order to realize the lightweight of offshore converter valve and converter station platform and reduce the cost of offshore wind power sending system, the scheme based on diodes is gradually favored by academic and industrial circles at home and abroad. At present, the sending scheme based on diode comprises the scheme with only diodes, the scheme with diode and auxiliary MMC connected in parallel, etc.

However, the scheme with only diodes has the problem of difficulty in black starting, and some literatures put forward the scheme of adding auxiliary undersea cable for black starting, but the extra undersea cable laying in this scheme increases the cost; the scheme with diode and auxiliary MMC connected in parallel can solve the problem of black starting, but because the auxiliary MMC is connected in parallel on the direct-current side, the direct-current voltage of the auxiliary MMC is the same as the direct-current voltage of the system, which leads to a huge number of submodules of the auxiliary MMC, and cannot effectively reduce the volume and cost of converter valve.

### SUMMARY OF THE INVENTION

In order to reduce the volume of the converter valve in the offshore converter station and reduce the cost of converter valve, the present application provides a parallel offshore wind power direct-current transmission system, a starting control method and apparatus.

In a first aspect, the present application provides a parallel offshore wind power direct-current transmission system, the system comprising: an onshore power grid, an onshore converter station, an offshore converter station and an offshore wind farm;
the onshore power grid is connected with the onshore converter station;
the onshore converter station is connected with the offshore converter station, and the offshore converter station comprises an offshore auxiliary flexible direct-current converter valve and a diode valve which is connected in parallel with the offshore auxiliary flexible direct-current converter valve; a first bypass switch is connected between the offshore auxiliary flexible direct-current converter valve and one terminal of a direct-current side of the diode valve; a second bypass switch is connected between the offshore auxiliary flexible direct-current converter valve and the other terminal of the direct-current side of the diode valve;
the offshore auxiliary flexible direct-current converter valve and the diode valve are respectively connected with the offshore wind farm.

Considering that the direct-current voltage value of the offshore auxiliary flexible direct-current converter valve is the same as the rated direct-current voltage value of the system in the scheme with the offshore auxiliary flexible direct-current converter valve and the diode valve connected in parallel, which leads to a huge number of submodules of the offshore auxiliary flexible direct-current converter valve. By means of the above system, the offshore auxiliary flexible direct-current converter valve in the offshore converter station is connected in parallel with the diode valve through the first bypass switch and the second bypass switch respectively, and the direct-current voltage value of the offshore auxiliary flexible direct-current converter valve is lower than the rated direct-current voltage value of the system during the starting of the offshore wind farm; and after the offshore wind farm is started, the first bypass switch and the second bypass switch are turned off, that is, the offshore auxiliary flexible direct-current converter valve is disconnected from the direct-current side of the system, so that the offshore auxiliary flexible direct-current converter valve is only configured to balance the reactive power of the offshore converter station, and at this time, the direct-current voltage value of the offshore auxiliary flexible direct-current converter valve is lower than the rated direct-current voltage value of the system; therefore, in the system provided by the present invention, the number of submodules of the offshore auxiliary flexible direct-current converter valve is reduced, and the volume and cost of the offshore auxiliary flexible direct-current converter valve are reduced.

In connection with the first aspect, in a first embodiment of the first aspect, the onshore converter station comprises a starting transformer, an onshore flexible direct-current converter valve and an operating transformer;
the onshore power grid is connected with the onshore flexible direct-current converter valve through a first circuit breaker, the starting transformer and a second circuit breaker in sequence;
the onshore power grid is connected with the onshore flexible direct-current converter valve through a third circuit breaker, the operating transformer and a fourth circuit breaker;
the onshore flexible direct-current converter valve is connected with the offshore converter station through a direct-current undersea cable.

In connection with the first embodiment of the first aspect, in a second embodiment of the first aspect, a fifth circuit breaker is connected between one terminal of the direct-current undersea cable and the diode valve, and a sixth circuit breaker is connected between the other terminal of the direct-current undersea cable and the diode valve.

In connection with the second embodiment of the first aspect, in a third embodiment of the first aspect, the offshore converter station further comprises a first transformer and a second transformer;
the diode valve is connected with a point of common coupling of the offshore wind farm through the first transformer and a seventh circuit breaker in sequence;
the offshore auxiliary flexible direct-current converter valve is connected with the point of common coupling through an eighth circuit breaker, the second transformer and a ninth circuit breaker in sequence.

In connection with the first aspect or the third embodiment of the first aspect, the system further comprises a network-forming power supply unit, which comprises a storage battery, a converter and a third transformer;
the network-forming power supply unit is configured to provide a network-forming voltage for the point of common coupling;
the storage battery is connected with the point of common coupling through the converter, a tenth circuit breaker, the third transformer and an eleventh circuit breaker in sequence.

In a second aspect, the present application further provides a starting control method for a parallel offshore wind power direct-current transmission system, the method is implemented by the parallel offshore wind power direct-current transmission system of the first aspect, and the method comprises:
controlling the onshore power grid to supply power to the offshore wind farm through the onshore converter station and the offshore auxiliary flexible direct-current converter valve of the offshore converter station, so as to start the offshore wind farm;
controlling an output power from the offshore wind farm to the offshore converter station until a current value passing through the first bypass switch and the second bypass switch is reduced to a preset current value, and turning off the first bypass switch and the second bypass switch;
setting the diode valve in the offshore converter station into a conducting state to complete the starting of the parallel offshore wind power direct-current transmission system.

In the parallel offshore wind power direct-current transmission system, the offshore auxiliary flexible direct-current converter valve in the offshore converter station is connected in parallel with the diode valve through the first bypass switch and the second bypass switch respectively. By means of the above method, the direct-current voltage value of the offshore auxiliary flexible direct-current converter valve is lower than the rated direct-current voltage value of the system during the starting of the offshore wind farm; and after the offshore wind farm is started, the first bypass switch and the second bypass switch are turned off, that is, the offshore auxiliary flexible direct-current converter valve is disconnected from the direct-current side of the system, and then the diode valve in the offshore converter station is set into a conducting state to complete the starting of the parallel offshore wind power direct-current transmission system, and during the process, the offshore auxiliary flexible direct-current converter valve is only configured to balance the reactive power of the offshore converter station, and at this time the direct-current voltage value of the offshore auxiliary flexible direct-current converter valve is lower than the rated direct-current voltage value of the system. That is, during the whole control process for starting of the parallel offshore wind power direct-current transmission system, the direct-current voltage value of the offshore auxiliary flexible direct-current converter valve is kept lower than the rated direct-current voltage value of the system, therefore, the number of submodules of the offshore auxiliary flexible direct-current converter valve is reduced, and the volume and cost of the offshore auxiliary flexible direct-current converter valve are reduced.

In connection with the second aspect, in a first embodiment of the second aspect, the onshore converter station comprises a starting transformer, an onshore flexible direct-current converter valve and an operating transformer; the onshore power grid is connected with the onshore flexible direct-current converter valve through a first circuit breaker, the starting transformer and a second circuit breaker in sequence; the onshore power grid is connected with the onshore flexible direct-current converter valve through a third circuit breaker, the operating transformer and a fourth circuit breaker; the onshore flexible direct-current converter valve is connected with the offshore converter station through a direct-current undersea cable; a fifth circuit breaker is connected between one terminal of the direct-current undersea cable and the diode valve, and a sixth circuit breaker is connected between the other terminal of the direct-current undersea cable and the diode valve; the offshore converter station further comprises a first transformer and a second transformer; the diode valve is connected with a point of common coupling of the offshore wind farm through the first transformer and a seventh circuit breaker in sequence; the offshore auxiliary flexible direct-current converter valve is connected with the point of common coupling through an eighth circuit breaker, the second transformer and a ninth circuit breaker in sequence;
the step of controlling the onshore power grid to supply power to the offshore wind farm through the onshore converter station and the offshore auxiliary flexible direct-current converter valve of the offshore converter station, so as to start the offshore wind farm, comprises:
closing the first circuit breaker, the second circuit breaker, the first bypass switch and the second bypass switch, so that the onshore power grid charges the onshore flexible direct-current converter valve through the starting transformer, and at the same time, the onshore power grid charges the offshore auxiliary flexible direct-current converter valve in the offshore converter station through the onshore flexible direct-current converter valve, until the onshore flexible direct-current converter valve and the offshore auxiliary flexible direct-current converter valve finish charging;
unlocking the onshore flexible direct-current converter valve, and setting the direct-current voltage value of the onshore flexible direct-current converter valve to be at a preset direct-current voltage value, and setting a reactive power value of the onshore flexible direct-current converter valve to be at a preset reactive power value;
closing the seventh circuit breaker, the eighth circuit breaker and the ninth circuit breaker, unlocking the offshore auxiliary flexible direct-current converter valve, controlling the offshore auxiliary flexible direct-current converter valve to boost the voltage value of the point of common coupling to reach a preset point-of-common-coupling voltage value by starting from zero, thereby starting a preset number of wind turbines in the offshore wind farm.

By means of the above embodiment, during the starting of the offshore wind farm, the direct-current voltage value of the offshore auxiliary flexible direct-current converter valve is equal to the preset direct-current voltage value of the onshore flexible direct-current converter valve, that is, the direct-current voltage value of the offshore auxiliary flexible direct-current converter valve is lower than the rated direct-current voltage value of the system, therefore, at this time, as compared with the prior art, the number of modules of the offshore auxiliary flexible direct-current converter valve is reduced, and the cost is reduced.

In connection with the first embodiment of the second aspect, in a second embodiment of the second aspect, the step of controlling the output power from the offshore wind farm to the offshore converter station until the current value passing through the first bypass switch and the second bypass switch is reduced to a preset current value, and turning off the first bypass switch and the second bypass switch, comprises:
controlling the offshore auxiliary flexible direct-current converter valve to reduce the voltage value of the point of common coupling, and making the offshore wind farm enter a controllable energy consumption mode after detecting a decrease of the voltage value of the point of common coupling, so as to control the output power from the offshore wind farm to the offshore converter station until the current value passing through the first bypass switch and the second bypass switch is reduced to a preset current value, and then turning off the first bypass switch and the second bypass switch.

In connection with the first embodiment of the second aspect, in a third embodiment of the second aspect, the step of controlling the output power from the offshore wind farm to the offshore converter station until the current value passing through the first bypass switch and the second bypass switch is reduced to a preset current value, and turning off the first bypass switch and the second bypass switch, comprises:
controlling the offshore auxiliary flexible direct-current converter valve to reduce the voltage value of the point of common coupling, and carrying out constant power control on a preset number of wind turbines to reduce the output power from the offshore wind farm to the offshore converter station until the current value passing through the first bypass switch and the second bypass switch is reduced to a preset current value, and then turning off the first bypass switch and the second bypass switch.

In connection with the first embodiment of the second aspect, in a fourth embodiment of the second aspect, the system further comprises a network-forming power supply unit, which comprises a storage battery, a converter and a third transformer;
the network-forming power supply unit is configured to provide a network-forming voltage for the point of common coupling;
the storage battery is connected with the point of common coupling through the converter, a tenth circuit breaker, the third transformer and an eleventh circuit breaker in sequence;
the step of controlling the output power from the offshore wind farm to the offshore converter station until the current value passing through the first bypass switch and the second bypass switch is reduced to a preset current value, and turning off the first bypass switch and the second bypass switch, comprises:
   controlling the network-forming power supply unit to reduce the output power from the offshore wind farm to the offshore converter station, then controlling the offshore auxiliary flexible direct-current converter valve to be in no-load operating condition, and turning off the first bypass switch and the second bypass switch.

In connection with the second embodiment of the second aspect, in a fifth embodiment of the second aspect, the step of setting the diode valve in the offshore converter station into a conducting state to complete the starting of the parallel offshore wind power direct-current transmission system comprises:
after controlling the direct-current voltage value of the onshore flexible direct-current converter valve to increase to a rated direct-current voltage value, turning off the first circuit breaker and the second circuit breaker, and closing the third circuit breaker and the fourth circuit breaker;
closing the fifth circuit breaker and the sixth circuit breaker, controlling the offshore auxiliary flexible direct-current converter valve to increase the voltage value of the point of common coupling to reach a rated alternating-current voltage value, so that the diode valve turns into a conducting state;
controlling the offshore wind farm to exit the controllable energy consumption mode, and controlling the offshore auxiliary flexible direct-current converter valve to have a direct-current voltage value that is constant and a Q-axis voltage value that is zero, so as to complete the starting of the parallel offshore wind power direct-current transmission system.

In connection with the third embodiment of the second aspect, in a sixth embodiment of the second aspect, the step of setting the diode valve in the offshore converter station into a conducting state to complete the starting of the parallel offshore wind power direct-current transmission system comprises:
after controlling the direct-current voltage value of the onshore flexible direct-current converter valve to increase to a rated direct-current voltage value, turning off the first circuit breaker and the second circuit breaker, and closing the third circuit breaker and the fourth circuit breaker;
closing the fifth circuit breaker and the sixth circuit breaker, controlling the offshore auxiliary flexible direct-current converter valve to increase the voltage value of the point of common coupling to reach a rated alternating-current voltage value, so that the diode valve turns into a conducting state;
controlling the offshore auxiliary flexible direct-current converter valve to have a direct-current voltage value that is constant and a Q-axis voltage value that is zero, so as to complete the starting of the parallel offshore wind power direct-current transmission system.

In connection with the fourth embodiment of the second aspect, in a seventh embodiment of the second aspect, the step of setting the diode valve in the offshore converter station into a conducting state to complete the starting of the parallel offshore wind power direct-current transmission system comprises:
after controlling the direct-current voltage value of the onshore flexible direct converter valve to increase to a rated direct-current voltage value, turning off the first circuit breaker and the second circuit breaker, and closing the third circuit breaker and the fourth circuit breaker;
closing the fifth circuit breaker and the sixth circuit breaker, controlling the network-forming power supply unit to increase the voltage value of the point of common coupling to reach a rated alternating-current voltage value, so that the diode valve turns into a conducting state;
controlling the offshore auxiliary flexible direct-current converter valve to have a direct-current voltage value that is constant and a Q-axis voltage value that is zero, and the network-forming power supply unit exits the network-forming operation mode, so as to complete the starting of the parallel offshore wind power direct-current transmission system.

In a third aspect, the present application further provides a starting control apparatus for a parallel offshore wind power direct-current transmission system, the apparatus is implemented by the parallel offshore wind power direct-current transmission system of the first aspect or any embodiment of the first aspect, and the apparatus comprises:
a first control module, configured to control the onshore power grid to supply power to the offshore wind farm through the onshore converter station and the offshore auxiliary flexible direct-current converter valve of the offshore converter station, so as to start the offshore wind farm;
a second control module, configured to control the output power from the offshore wind farm to the offshore converter station until the current value passing through the first bypass switch and the second bypass switch is reduced to a preset current value, and turn off the first bypass switch and the second bypass switch;
a conduction module, configured to set the diode valve in the offshore converter station into a conducting state to complete the starting of the parallel offshore wind power direct-current transmission system.

In a fourth aspect, the present application further provides a computer device, comprising a memory and a processor, wherein the memory and the processor are in communication connection with each other, the memory has computer instructions stored therein, and the processor is configured to execute the computer instructions to implement the steps of the starting control method of the second aspect or any embodiment of the second aspect for a parallel offshore wind power direct-current transmission system.

### BRIEF DESCRIPTION OF THE DRAWINGS

In order to explain the technical solutions in the specific embodiments of the present application or in the prior art more clearly, the drawings needed in the description of the specific embodiments or the prior art will be briefly introduced below. Apparently, the drawings described below only represent some embodiments of the present application. For a person with ordinary skill in the art, other drawings can be obtained according to these drawings without expenditure of creative work.
Fig. 1 is a circuit diagram of a parallel offshore wind power direct-current transmission system according to an exemplary embodiment;
Fig. 2 is a schematic structural diagram of a half-bridge submodule in an example;
Fig. 3 is a flowchart of a starting control method for a parallel offshore wind power direct-current transmission system according to an exemplary embodiment;
Fig. 4 is a schematic structural diagram of a starting control apparatus for a parallel offshore wind power direct-current transmission system according to an exemplary embodiment;
Fig. 5 is a schematic diagram of the hardware structure of a computer device according to an exemplary embodiment.

### DETAILED DESCRIPTION OF SPECIFIC EMBODIMENTS

The technical scheme of the present application will be described clearly and completely with reference to the drawings. Apparently, the described embodiments only represent part of the embodiments of the present application, not all of them. Based on the embodiments described in the present application, all other embodiments obtainable by a person with ordinary skill in the art without expenditure of creative work belong to the protection scope of the present application.

In addition, the technical features involved in different embodiments of the present application described below can be combined with each other as long as they do not conflict with each other.

In order to reduce the volume and cost of the converter valve in the offshore converter station, the present application provides a parallel offshore wind power direct-current transmission system, a starting control method and apparatus.

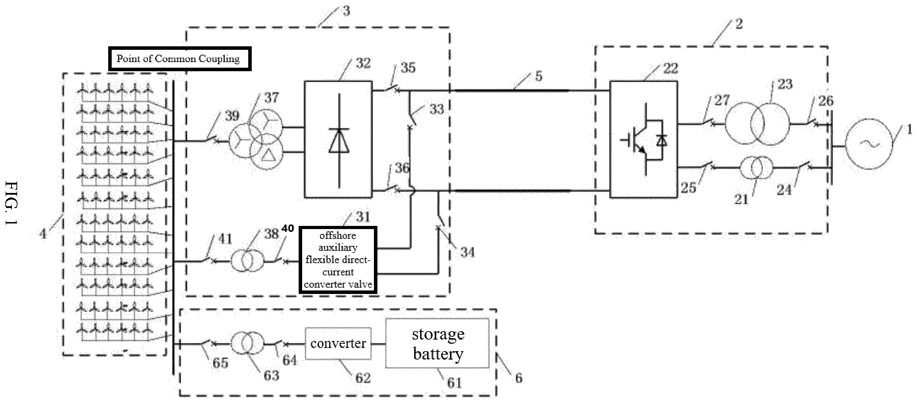

Fig. 1 is a circuit diagram of a parallel offshore wind power direct-current transmission system according to an exemplary embodiment, the system comprising: an onshore power grid 1, an onshore converter station 2, an offshore converter station 3 and an offshore wind farm 4.

The onshore power grid 1 is connected with the onshore converter station 2.

In an optional embodiment, the onshore power grid 1 may be connected with the onshore converter station 2 through a direct-current undersea cable 5, or it may be connected with the onshore converter station 2 through a direct-current overhead line, etc., which is not specifically limited herein.

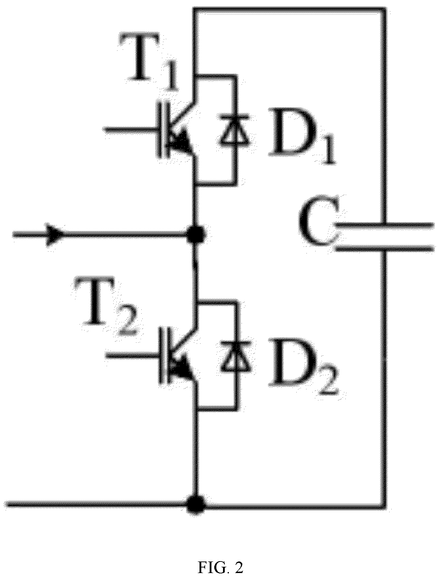

In an optional embodiment, the onshore converter station 2 may adopt a conventional half-bridge MMC converter valve, and the structural schematic diagram of a half-bridge submodule thereof is shown in Fig. 2. In Fig. 2, a half-bridge submodule comprises a capacitor C, a diode D₁, a diode D₂, and fully-controllable power switching devices T₁ and T₂, wherein T₁ and T₂ may be insulated gate bipolar transistor (IGBT) or integrated gate-commutated thyristor (IGCT).

The onshore converter station 2 is connected with the offshore converter station 3, and the offshore converter station 3 comprises an offshore auxiliary flexible direct-current converter valve 31 and a diode valve 32 which is connected in parallel with the offshore auxiliary flexible direct-current converter valve 31; a first bypass switch 33 is connected between the offshore auxiliary flexible direct-current converter valve 31 and one terminal of a direct-current side of the diode valve 32; a second bypass switch 34 is connected between the offshore auxiliary flexible direct-current converter valve 31 and the other terminal of the direct-current side of the diode valve 32.

In an optional embodiment, the offshore auxiliary flexible direct-current converter valve (offshore auxiliary MMC) 31 may adopt a conventional half-bridge MMC converter valve.

In an optional embodiment, the diode valve 32 may adopt a twelve-pulse rectifier.

In an optional embodiment, when the offshore converter station 3 is connected with the onshore converter station 2 through a direct-current undersea cable 5, said one terminal of a direct-current side of the diode valve 32 is one terminal where the direct-current undersea cable 5 is connected with the offshore converter station 3.

In an optional embodiment, a bypass switch with certain current disconnecting capability may be adopted as the first bypass switch 33 and the second bypass switch 34.

The offshore auxiliary flexible direct-current converter valve 31 and the diode valve 32 are respectively connected with the offshore wind farm 4.

Considering that the direct-current voltage value of the offshore auxiliary flexible direct-current converter valve 31 is the same as the rated direct-current voltage value of the system in the scheme with the offshore auxiliary flexible direct-current converter valve 31 and the diode valve 32 connected in parallel, which leads to a huge number of submodules of the offshore auxiliary flexible direct-current converter valve 31. By means of the above system provided by the embodiments of the present application, the offshore auxiliary flexible direct-current converter valve 31 in the offshore converter station 3 is connected in parallel with the diode valve 32 through the first bypass switch 33 and the second bypass switch 34 respectively, and for the offshore auxiliary flexible direct-current converter valve 31 during the starting of the offshore wind farm 4, a smaller direct-current voltage value is outputted by controlling the onshore converter station to only make use of a few submodules, so that the direct-current voltage value of the offshore auxiliary flexible direct-current converter valve 31 is lower than the rated direct-current voltage value of the system; and after the offshore wind farm 4 is started, the first bypass switch 33 and the second bypass switch 34 are turned off, that is, the offshore auxiliary flexible direct-current converter valve 31 is disconnected from the direct-current side of the system, so that the offshore auxiliary flexible direct-current converter valve 31 is only configured to balance the reactive power of the offshore converter station 3, and at this time, the direct-current voltage value of the offshore auxiliary flexible direct-current converter valve 31 is lower than the rated direct-current voltage value of the system, and the number of submodules of the offshore auxiliary flexible direct-current converter valve 31 is proportional to its direct-current voltage value. Therefore, in the system provided by the present invention, the number of submodules of the offshore auxiliary flexible direct-current converter valve 31 is reduced, and the volume and cost of the offshore auxiliary flexible direct-current converter valve 31 are reduced.

In Fig. 1, the onshore converter station 2 comprises a starting transformer 21, an onshore flexible direct-current converter valve 22 and an operating transformer 23.

The onshore power grid 1 is connected with the onshore flexible direct-current converter valve 22 through a first circuit breaker 24, the starting transformer 21 and a second circuit breaker 25 in sequence; the onshore power grid 1 is connected with the onshore flexible direct-current converter valve 22 through a third circuit breaker 26, the operating transformer 23 and a fourth circuit breaker 27.

In an optional embodiment, the starting transformer 21 is a small-capacity transformer, which is configured to be used in the black starting phase (i.e. the starting phase of the offshore wind farm 4). The operating transformer 23 is a large-capacity transformer, which is configured to be used in the steady-state operation stage after the offshore wind farm 4 is started. When the system is in the black starting stage, the onshore converter station 2 uses the starting transformer 21, which can keep the conventional half-bridge MMC adopted in the onshore converter station 2 unchanged, and output a smaller direct-current voltage value by making use of less submodules to match the output voltage of the starting transformer 21 during the starting, so as to avoid over-modulation of the onshore converter station during the starting.

In Fig. 1, the onshore flexible direct-current converter valve 22 is connected with the offshore converter station 3 through a direct-current undersea cable 5. A fifth circuit breaker 35 is connected between one terminal of the direct-current undersea cable 5 and the diode valve 32, and a sixth circuit breaker 36 is connected between the other terminal of the direct-current undersea cable 5 and the diode valve 32.

In an optional embodiment, said one terminal of the direct-current undersea cable 5 is one terminal at the direct-current side of the diode valve 32.

In Fig. 1, the offshore converter station 3 further comprises a first transformer 37 and a second transformer 38.

The diode valve 32 is connected with a point of common coupling (PCC) of the offshore wind farm through the first transformer 37 and a seventh circuit breaker 39 in sequence; the offshore auxiliary flexible direct-current converter valve 31 is connected with the point of common coupling through an eighth circuit breaker 40, the second transformer 38 and a ninth circuit breaker 41 in sequence.

In Fig. 1, the system further comprises a network-forming power supply unit 6, which comprises a storage battery 61, a converter 62 and a third transformer 63.

The network-forming power supply unit 6 is configured to provide a network-forming voltage for the point of common coupling.

The storage battery 61 is connected with the point of common coupling through the converter 62, a tenth circuit breaker 64, the third transformer 63 and an eleventh circuit breaker 65 in sequence.

In Fig. 1, after the starting of the system is completed, the offshore auxiliary flexible direct-current converter valve 31 is configured to realize functions such as active filtering and dynamic reactive power compensation, which are not specifically limited herein.

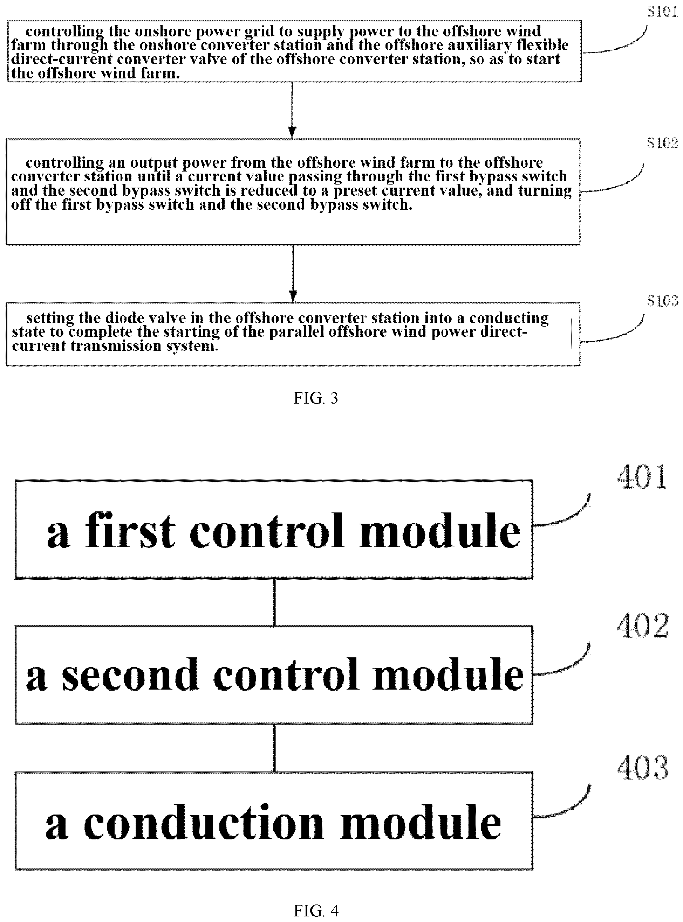

Fig. 3 is a flowchart of a starting control method for a parallel offshore wind power direct-current transmission system according to an exemplary embodiment, which is implemented by the parallel offshore wind power direct-current transmission system described above, and the method comprises the following steps:
Step S101: controlling the onshore power grid 1 to supply power to the offshore wind farm 4 through the onshore converter station 2 and the offshore auxiliary flexible direct-current converter valve 31 of the offshore converter station 3, so as to start the offshore wind farm 4.

In an optional embodiment, controlling the onshore power grid 1 to supply power to the onshore converter station 2 and the offshore auxiliary flexible direct-current converter valve 31 of the offshore converter station 3 in an uncontrolled charging manner, and unlocking the onshore converter station 2 and the offshore auxiliary flexible direct-current converter valve 31 after the onshore converter station 2 and the offshore auxiliary flexible direct-current converter valve 31 of the offshore converter station 3 finish charging, so as to provide a starting power supply for the offshore wind farm 4 to start a preset number of wind turbines in the offshore wind farm 4.

Step S102: controlling an output power from the offshore wind farm 4 to the offshore converter station 3 until a current value passing through the first bypass switch 33 and the second bypass switch 34 is reduced to a preset current value, and turning off the first bypass switch 33 and the second bypass switch 34.

In an optional embodiment, the output power from the offshore wind farm 4 to the offshore converter station 3 is output active power.

In an optional embodiment, the offshore wind farm 4 is controlled to enter a controllable energy consumption mode, so that the output active power from the offshore wind farm 4 to the offshore converter station 3 becomes zero, until the current value passing through the first bypass switch 33 and the second bypass switch 34 is reduced to a preset current value, and then the first bypass switch 33 and the second bypass switch 34 are turned off.

In an optional embodiment, by carrying out constant power control on a preset number of wind turbines, it is possible to reduce the output power from the offshore wind farm 4 to the offshore converter station 3, until the current value passing through the first bypass switch 33 and the second bypass switch 34 is reduced to a preset current value, and then the first bypass switch 33 and the second bypass switch 34 are turned off.

In an optional embodiment, by controlling the network-forming power supply unit 6, it is also possible to reduce the output power from the offshore wind farm 4 to the offshore converter station 3, until the current value passing through the first bypass switch 33 and the second bypass switch 34 is reduced to a preset current value, and then the first bypass switch 33 and the second bypass switch 34 are turned off.

Step S103: setting the diode valve 32 in the offshore converter station 3 into a conducting state to complete the starting of the parallel offshore wind power direct-current transmission system.

In an optional embodiment, after controlling the direct-current voltage value of the onshore flexible direct-current converter valve 22 to increase to a rated direct-current voltage value, turning off the first circuit breaker 24 and the second circuit breaker 25, and closing the third circuit breaker 26 and the fourth circuit breaker 27; closing the fifth circuit breaker 35 and the sixth circuit breaker 36, controlling the offshore auxiliary flexible direct-current converter valve 31 or the network-forming power supply unit 6 to increase the voltage value of the point of common coupling to reach a rated alternating-current voltage value, and at this time the diode valve 32 turns into a conducting state.

In the parallel offshore wind power direct-current transmission system, the offshore auxiliary flexible direct-current converter valve 31 in the offshore converter station 3 is connected in parallel with the diode valve 32 through the first bypass switch 33 and the second bypass switch 34 respectively. By means of the above method, the direct-current voltage value of the offshore auxiliary flexible direct-current converter valve 31 is lower than the rated direct-current voltage value of the system during the starting of the offshore wind farm 4; and after the offshore wind farm 4 is started, the first bypass switch 33 and the second bypass switch 34 are turned off, that is, the offshore auxiliary flexible direct-current converter valve 31 is disconnected from the direct-current side of the system, and then the diode valve 32 in the offshore converter station 3 is set into a conducting state to complete the starting of the parallel offshore wind power direct-current transmission system, and during the process, the offshore auxiliary flexible direct-current converter valve 31 is only configured to balance the reactive power of the offshore converter station, and at this time the direct-current voltage value of the offshore auxiliary flexible direct-current converter valve 31 is lower than the rated direct-current voltage value of the system. That is, during the whole control process for starting of the parallel offshore wind power direct-current transmission system, the direct-current voltage value of the offshore auxiliary flexible direct-current converter valve 31 is kept lower than the rated direct-current voltage value of the system, therefore, the number of submodules of the offshore auxiliary flexible direct-current converter valve 31 is reduced, and the volume and cost of the offshore auxiliary flexible direct-current converter valve 31 are reduced.

In an example, in the above step S101, the starting of the offshore wind farm is realized through the following contents:
Firstly, closing the first circuit breaker 24, the second circuit breaker 25, the first bypass switch 33 and the second bypass switch 34, so that the onshore power grid 1 charges the onshore flexible direct-current converter valve 22 through the starting transformer 21, and at the same time, the onshore power grid 1 charges the offshore auxiliary flexible direct-current converter valve 31 in the offshore converter station 3 through the onshore flexible direct-current converter valve 22, until the onshore flexible direct-current converter valve 22 and the offshore auxiliary flexible direct-current converter valve 31 finish charging.

In an optional embodiment, the charging mode of the onshore flexible direct-current converter valve 22 and the offshore auxiliary flexible direct-current converter valve 31 is uncontrolled charging.

Then, unlocking the onshore flexible direct-current converter valve 22, and setting the direct-current voltage value of the onshore flexible direct-current converter valve 22 to be at a preset direct-current voltage value, and setting a reactive power value of the onshore flexible direct-current converter valve 22 to be at a preset reactive power value. At this time, the preset direct-current voltage value is lower than the rated direct-current voltage value. Illustratively, the preset direct-current voltage value may be set to 10% of the rated direct-current voltage value. The preset reactive power value may be set to 0.

In an optional embodiment, by controlling a preset number of submodules in the onshore flexible direct-current converter valve, a smaller preset direct-current voltage value is outputted, so that the preset direct-current voltage value is lower than the rated direct-current voltage value, thereby providing a starting power supply for the wind turbines in the offshore wind farm. At the same time, the first transformer 37 corresponding to the diode valve 32 is excited so as to reduce the current impact when the diode valve turns into a conducting state.

In an optional embodiment, in order to ensure the capacitor voltage balance among all submodules in the onshore flexible direct-current converter valve during the starting, the submodules are alternately put into operation by taking turns, and a preset number of submodules are always kept in operating condition during the process of different submodules taking turns. For example, 10% of the submodules may be set to be in operating condition.

Finally, closing the seventh circuit breaker 39, the eighth circuit breaker 40 and the ninth circuit breaker 41, unlocking the offshore auxiliary flexible direct-current converter valve 31, controlling the offshore auxiliary flexible direct-current converter valve 31 to boost the voltage value of the point of common coupling to reach a preset point-of-common-coupling voltage value by starting from zero, thereby starting a preset number of wind turbines in the offshore wind farm 4.

In an optional embodiment, after unlocking the offshore auxiliary flexible direct-current converter valve 31, by adopting constant voltage amplitude and frequency control, the alternating-current side voltage is established by starting from zero, so as to provide a starting power supply for the wind turbines in the offshore wind farm 4.

By means of the above embodiment, during the starting of the offshore wind farm 4, the direct-current voltage value of the offshore auxiliary flexible direct-current converter valve 31 is equal to the preset direct-current voltage value of the onshore flexible direct-current converter valve 22, that is, the direct-current voltage value of the offshore auxiliary flexible direct-current converter valve 31 is lower than the rated direct-current voltage value of the system, therefore, at this time, as compared with the prior art, the number of modules of the offshore auxiliary flexible direct-current converter valve 31 is reduced, and the cost is reduced. At the same time, during the starting of the offshore wind farm 4, the starting transformer 21 is used to output voltage, so as to avoid over-modulation of the onshore converter station 2 during the starting.

In an example, the above step S102 turns off the first bypass switch 33 and the second bypass switch 34 in the following way:
Controlling the offshore auxiliary flexible direct-current converter valve 31 to reduce the voltage value of the point of common coupling, and making the offshore wind farm 4 enter a controllable energy consumption mode after detecting a decrease of the voltage value of the point of common coupling, so as to control the output power from the offshore wind farm 4 to the offshore converter station 3 until the current value passing through the first bypass switch 33 and the second bypass switch 34 is reduced to a preset current value, and then turning off the first bypass switch 33 and the second bypass switch 34.

In an optional embodiment, controlling the offshore auxiliary flexible direct-current converter valve 31 to reduce the voltage value of the point of common coupling. Illustratively, the voltage value of the point of common coupling may be set to 0.8 times of the rated value; then, by controlling the offshore wind farm 4 to enter a controllable energy consumption mode, the output active power from the offshore wind farm 4 to the offshore converter station 3 becomes zero; because of lack of active power from the offshore wind farm 4, the direct-current voltage value of the offshore auxiliary flexible direct-current converter valve 31 decreases. At this time, the direct-current voltage value of the offshore auxiliary flexible direct-current converter valve 31 is lower than the direct-current voltage value of the onshore flexible direct-current converter valve 22, and the onshore flexible direct-current converter valve 22 sends back power to the offshore auxiliary flexible direct-current converter valve 31 to charge the capacitors of the offshore auxiliary flexible direct-current converter valve 31; and when the direct-current voltage value of the offshore auxiliary flexible direct-current converter valve 31 has risen to be close to the direct-current voltage value of the onshore flexible direct-current converter valve 22 and the direct-current current thereof is reduced to a preset current value, turning off the first bypass switch 33 and the second bypass switch 34. Illustratively, the preset current value may be set to 0.

In an example, the above step S102 turns off the first bypass switch 33 and the second bypass switch 34 in the following way:
Controlling the offshore auxiliary flexible direct-current converter valve 31 to reduce the voltage value of the point of common coupling, and carrying out constant power control on a preset number of wind turbines to reduce the output power from the offshore wind farm 4 to the offshore converter station 3 until the current value passing through the first bypass switch 33 and the second bypass switch 34 is reduced to a preset current value, and then turning off the first bypass switch 33 and the second bypass switch 34.

In an optional embodiment, controlling the offshore auxiliary flexible direct-current converter valve 31 to reduce the voltage value of the point of common coupling, and carrying out constant power control on a preset number of wind turbines to reduce the output power from the offshore wind farm 4 to the offshore converter station 3. The output power meets the load requirements of the first transformer 37 and the second transformer 38 and the in-station load requirement of the offshore wind farm 4, while at the same time having a small amount of surplus power. At this time, the direct-current side current of the offshore auxiliary flexible direct-current converter valve 31 is reduced to a preset current value, and then turning off the first bypass switch 33 and the second bypass switch 34. Similarly, the preset current value can be set according to actual needs.

In an example, the above step S102 turns off the first bypass switch 33 and the second bypass switch 34 in the following way:
controlling the network-forming power supply unit 6 to reduce the output power from the offshore wind farm 4 to the offshore converter station 3. Illustratively, the output power may be set to be slightly lower than the rated power of the point of common coupling; then controlling the offshore auxiliary flexible direct-current converter valve 31 to be in no-load operating condition (that is, the offshore auxiliary flexible direct-current converter valve 31 does not output active power, and at this time, the direct-current current of the offshore auxiliary flexible direct-current converter valve 31 is zero), and turning off the first bypass switch 33 and the second bypass switch 34.

In an example, after controlling the offshore wind farm 4 to enter the controllable energy consumption mode and turning off the first bypass switch 33 and the second bypass switch 34, the above step S103 completes the starting of the parallel offshore wind power direct-current transmission system through the following contents:
First, after controlling the direct-current voltage value of the onshore flexible direct-current converter valve 22 to increase to a rated direct-current voltage value, turning off the first circuit breaker 24 and the second circuit breaker 25, and closing the third circuit breaker 26 and the fourth circuit breaker 27. At this time, the circuit is switched from the starting transformer 21 to the operating transformer 23.

Then, closing the fifth circuit breaker 35 and the sixth circuit breaker 36, controlling the offshore auxiliary flexible direct-current converter valve 31 to increase the voltage value of the point of common coupling to reach a rated alternating-current voltage value, so that the diode valve 32 turns into a conducting state.

Finally, controlling the offshore wind farm 4 to exit the controllable energy consumption mode, and at this time, the offshore wind farm 4 has gradually increased the power delivered to the offshore converter station 3 in the controllable energy consumption mode, and controlling the offshore auxiliary flexible direct-current converter valve 31 to have a direct-current voltage value that is constant and a Q-axis voltage value that is zero, so as to complete the starting of the parallel offshore wind power direct-current transmission system and put the whole system into normal operation.

In an example, after carrying out constant power control on a preset number of wind turbines and turning off the first bypass switch 33 and the second bypass switch 34, the above step S103 completes the starting of the parallel offshore wind power direct-current transmission system through the following contents:
First, after controlling the direct-current voltage value of the onshore flexible direct-current converter valve 22 to increase to a rated direct-current voltage value, turning off the first circuit breaker 24 and the second circuit breaker 25, and closing the third circuit breaker 26 and the fourth circuit breaker 27. After turning off the first bypass switch 33 and the second bypass switch 34, the remaining power will make the capacitance energy of the auxiliary MMC rise slowly. And before the capacitance energy rises to the threshold value, the direct-current voltage value of the onshore flexible direct-current converter valve 22 is controlled to increase to the rated direct-current voltage value, and then turning off the first circuit breaker 24 and the second circuit breaker 25, and closing the third circuit breaker 26 and the fourth circuit breaker 27, so that the circuit is switched from the starting transformer 21 to the operating transformer 23.

Then, closing the fifth circuit breaker 35 and the sixth circuit breaker 36, controlling the offshore auxiliary flexible direct-current converter valve 31 to increase the voltage value of the point of common coupling to reach a rated alternating-current voltage value, so that the diode valve 32 turns into a conducting state.

Finally, controlling the offshore auxiliary flexible direct-current converter valve 31 to have a direct-current voltage value that is constant and a Q-axis voltage value that is zero, so as to complete the starting of the parallel offshore wind power direct-current transmission system and put the whole system into normal operation.

In an example, after controlling the network-forming power supply unit 6 to reduce the output power from the offshore wind farm 4 to the offshore converter station 3 and turning off the first bypass switch 33 and the second bypass switch 34, the above step S103 completes the starting of the parallel offshore wind power direct-current transmission system through the following contents:
First, after controlling the direct-current voltage value of the onshore flexible direct-current converter valve 22 to increase to a rated direct-current voltage value, turning off the first circuit breaker 24 and the second circuit breaker 25, and closing the third circuit breaker 26 and the fourth circuit breaker 27. At this time, the circuit is switched from the starting transformer 21 to the operating transformer 23.

Then, closing the fifth circuit breaker 35 and the sixth circuit breaker 36, controlling the network-forming power supply unit 6 to increase the voltage value of the point of common coupling to reach a rated alternating-current voltage value, so that the diode valve 32 turns into a conducting state.

Finally, controlling the offshore auxiliary flexible direct-current converter valve 31 to have a direct-current voltage value that is constant and a Q-axis voltage value that is zero, and the network-forming power supply unit 6 exits the network-forming operation mode, so as to complete the starting of the parallel offshore wind power direct-current transmission system and put the whole system into normal operation.

Based on the same inventive concept, the embodiments of the present application also provide a starting control apparatus for a parallel offshore wind power direct-current transmission system, as shown in Fig. 4, and the apparatus comprises:
a first control module 401, configured to control the onshore power grid to supply power to the offshore wind farm through the onshore converter station and the offshore auxiliary flexible direct-current converter valve of the offshore converter station, so as to start the offshore wind farm; for details, please refer to the description of step S101 in the above-mentioned embodiment, which will not be repeated herein.
a second control module 402, configured to control the output power from the offshore wind farm to the offshore converter station until the current value passing through the first bypass switch and the second bypass switch is reduced to a preset current value, and turn off the first bypass switch and the second bypass switch; for details, please refer to the description of step S102 in the above-mentioned embodiment, which will not be repeated herein.
a conduction module 403, configured to set the diode valve in the offshore converter station into a conducting state to complete the starting of the parallel offshore wind power direct-current transmission system. For details, please refer to the description of step S103 in the above-mentioned embodiment, which will not be repeated herein.

In an example, the onshore converter station comprises a starting transformer, an onshore flexible direct-current converter valve and an operating transformer; the onshore power grid is connected with the onshore flexible direct-current converter valve through a first circuit breaker, the starting transformer and a second circuit breaker in sequence; the onshore power grid is connected with the onshore flexible direct-current converter valve through a third circuit breaker, the operating transformer and a fourth circuit breaker; the onshore flexible direct-current converter valve is connected with the offshore converter station through a direct-current undersea cable; a fifth circuit breaker is connected between one terminal of the direct-current undersea cable and the diode valve, and a sixth circuit breaker is connected between the other terminal of the direct-current undersea cable and the diode valve; the offshore converter station further comprises a first transformer and a second transformer; the diode valve is connected with a point of common coupling of the offshore wind farm through the first transformer and a seventh circuit breaker in sequence; the offshore auxiliary flexible direct-current converter valve is connected with the point of common coupling through an eighth circuit breaker, the second transformer and a ninth circuit breaker in sequence;

The first control module 401 comprises:
a first closing submodule, configured to close the first circuit breaker, the second circuit breaker, the first bypass switch and the second bypass switch, so that the onshore power grid charges the onshore flexible direct-current converter valve through the starting transformer, and at the same time, the onshore power grid charges the offshore auxiliary flexible direct-current converter valve in the offshore converter station through the onshore flexible direct-current converter valve, until the onshore flexible direct-current converter valve and the offshore auxiliary flexible direct-current converter valve finish charging; for details, please refer to the description in the above-mentioned embodiment, which will not be repeated herein.

An unlocking submodule, configured to unlock the onshore flexible direct-current converter valve, and set the direct-current voltage value of the onshore flexible direct-current converter valve to be at a preset direct-current voltage value, and set a reactive power value of the onshore flexible direct-current converter valve to be at a preset reactive power value; for details, please refer to the description in the above-mentioned embodiment, which will not be repeated herein.

A second closing submodule, configured to close the seventh circuit breaker, the eighth circuit breaker and the ninth circuit breaker, unlock the offshore auxiliary flexible direct-current converter valve, control the offshore auxiliary flexible direct-current converter valve to boost the voltage value of the point of common coupling to reach a preset point-of-common-coupling voltage value by starting from zero, thereby starting a preset number of wind turbines in the offshore wind farm. For details, please refer to the description in the above-mentioned embodiment, which will not be repeated herein.

In an example, the second control module 402 comprises:
a first controlling submodule, configured to control the offshore auxiliary flexible direct-current converter valve to reduce the voltage value of the point of common coupling, and make the offshore wind farm enter a controllable energy consumption mode after detecting a decrease of the voltage value of the point of common coupling, so as to control the output power from the offshore wind farm to the offshore converter station until the current value passing through the first bypass switch and the second bypass switch is reduced to a preset current value, and then turn off the first bypass switch and the second bypass switch. For details, please refer to the description in the above-mentioned embodiment, which will not be repeated herein.

In an example, the second control module 402 further comprises:
a second controlling submodule, configured to control the offshore auxiliary flexible direct-current converter valve to reduce the voltage value of the point of common coupling, and carry out constant power control on a preset number of wind turbines to reduce the output power from the offshore wind farm to the offshore converter station until the current value passing through the first bypass switch and the second bypass switch is reduced to a preset current value, and then turn off the first bypass switch and the second bypass switch. For details, please refer to the description in the above-mentioned embodiment, which will not be repeated herein.

In an example, the system further comprises a network-forming power supply unit, which comprises a storage battery, a converter and a third transformer;
the network-forming power supply unit is configured to provide a network-forming voltage for the point of common coupling;
the storage battery is connected with the point of common coupling through the converter, a tenth circuit breaker, the third transformer and an eleventh circuit breaker in sequence.

The second control module 402 further comprises:
a third controlling submodule, configured to control the network-forming power supply unit to reduce the output power from the offshore wind farm to the offshore converter station, then control the offshore auxiliary flexible direct-current converter valve to be in no-load operating condition, and turn off the first bypass switch and the second bypass switch. For details, please refer to the description in the above-mentioned embodiment, which will not be repeated herein.

In an example, the conduction module 403 comprises:
a fourth controlling submodule, configured to, after controlling the direct-current voltage value of the onshore flexible direct-current converter valve to increase to a rated direct-current voltage value, turn off the first circuit breaker and the second circuit breaker, and close the third circuit breaker and the fourth circuit breaker; for details, please refer to the description in the above-mentioned embodiment, which will not be repeated herein.
a fifth controlling submodule, configured to close the fifth circuit breaker and the sixth circuit breaker, control the offshore auxiliary flexible direct-current converter valve to increase the voltage value of the point of common coupling to reach a rated alternating-current voltage value, so that the diode valve turns into a conducting state; for details, please refer to the description in the above-mentioned embodiment, which will not be repeated herein.
a sixth controlling submodule, configured to control the offshore wind farm to exit the controllable energy consumption mode, and control the offshore auxiliary flexible direct-current converter valve to have a direct-current voltage value that is constant and a Q-axis voltage value that is zero, so as to complete the starting of the parallel offshore wind power direct-current transmission system. For details, please refer to the description in the above-mentioned embodiment, which will not be repeated herein.

In an example, the conduction module 403 further comprises:
a seventh controlling submodule, configured to, after controlling the direct-current voltage value of the onshore flexible direct-current converter valve to increase to a rated direct-current voltage value, turn off the first circuit breaker and the second circuit breaker, and close the third circuit breaker and the fourth circuit breaker; for details, please refer to the description in the above-mentioned embodiment, which will not be repeated herein.

An eighth controlling submodule, configured to close the fifth circuit breaker and the sixth circuit breaker, control the offshore auxiliary flexible direct-current converter valve to increase the voltage value of the point of common coupling to reach a rated alternating-current voltage value, so that the diode valve turns into a conducting state; for details, please refer to the description in the above-mentioned embodiment, which will not be repeated herein.

A ninth controlling submodule, configured to control the offshore auxiliary flexible direct-current converter valve to have a direct-current voltage value that is constant and a Q-axis voltage value that is zero, so as to complete the starting of the parallel offshore wind power direct-current transmission system. For details, please refer to the description in the above-mentioned embodiment, which will not be repeated herein.

In an example, the conduction module 403 further comprises:
a tenth controlling submodule, configured to, after controlling the direct-current voltage value of the onshore flexible direct converter valve to increase to a rated direct-current voltage value, turn off the first circuit breaker and the second circuit breaker, and close the third circuit breaker and the fourth circuit breaker; for details, please refer to the description in the above-mentioned embodiment, which will not be repeated herein.

An eleventh controlling submodule, configured to close the fifth circuit breaker and the sixth circuit breaker, control the network-forming power supply unit to increase the voltage value of the point of common coupling to reach a rated alternating-current voltage value, so that the diode valve turns into a conducting state; for details, please refer to the description in the above-mentioned embodiment, which will not be repeated herein.

A twelfth controlling submodule, configured to control the offshore auxiliary flexible direct-current converter valve to have a direct-current voltage value that is constant and a Q-axis voltage value that is zero, and make the network-forming power supply unit exit the network-forming operation mode, so as to complete the starting of the parallel offshore wind power direct-current transmission system. For details, please refer to the description in the above-mentioned embodiment, which will not be repeated herein.

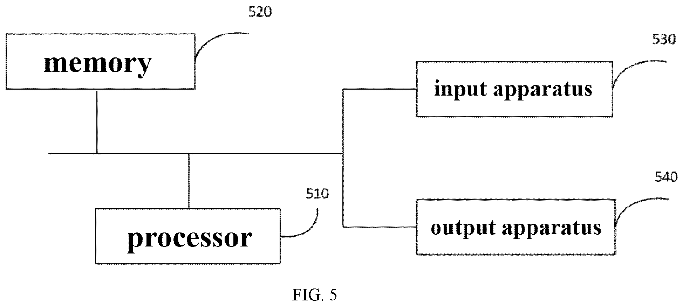

Fig. 5 is a schematic diagram of the hardware structure of a computer device according to an exemplary embodiment. As shown in Fig. 5, the device comprises one or more processors 510 and one or more memories 520. The memory 520 comprises persistent memory, volatile memory and hard disk. One processor 510 is taken as an example in Fig. 5. The device may further comprise an input apparatus 530 and an output apparatus 540.

The processor 510, the memory 520, the input apparatus 530 and the output apparatus 540 may be interconnected through a bus or other means. In Fig. 5, the connection through a bus is taken as an example.

The processor 510 may be a Central Processing Unit (CPU). The processor 510 may also be other general-purpose processors, Digital Signal Processor (DSP), Application Specific Integrated Circuit (ASIC), Field-Programmable Gate Array (FPGA) or other programmable logic devices, discrete gate or transistor logic devices, discrete hardware components and other chips, or a combination of the above-mentioned chips. The general processor may be a microprocessor, or the processor may be any conventional processor, etc.

As a non-transient computer-readable storage medium, the memory 520 comprises persistent memory, volatile memory and hard disk, and can be used to store non-transient software programs, non-transient computer-executable programs and modules, such as program instructions/modules corresponding to the starting control method for a parallel offshore wind power direct-current transmission system in the embodiments of the present application. The processor 510 executes various functional applications and data processing of the server by running non-transient software programs, instructions and modules stored in the memory 520, that is, implementing any one of the above-mentioned starting control methods for a parallel offshore wind power direct-current transmission system.

The memory 520 may comprise a program storage area and a data storage area, wherein the program storage area may store an operating system and an application program required by at least one function; the data storage area may store the data required to be used and so on. In addition, the memory 520 may comprise high-speed random access memory, and the memory 520 may also comprise non-transient memory, for example, at least one disk memory device, flash memory device, or other non-transient solid-state memory devices. In some embodiments, the memory 520 may optionally comprise memories remotely located with respect to the processor 510, and these remote memories can be connected to the data processing apparatus through a network. Examples of the above network comprise, but are not limited to, the Internet, the Intranet, the local area network, the mobile communication network, and combinations thereof.

The input apparatus 530 can receive input digital or character information and generate signal input related to user settings and functional control. The output apparatus 540 may comprise a display device such as a display screen.

One or more modules are stored in the memory 520, and when the one or more modules are executed by one or more processors 510, the method shown in Fig. 3 is implemented.

The above product can execute the method provided by the embodiments of the present application, and has functional modules and beneficial effects corresponding to the above method. For technical details that are not described in detail in this embodiment, please refer to the related description of the embodiment shown in Fig. 3.

The embodiments of the present application also provide a non-transient computer storage medium, and the computer storage medium has computer executable instructions stored therein, the computer executable instructions can execute the starting control method in any of the above method embodiments. Wherein, the storage medium may be a magnetic disk, an optical disk, a Read-Only Memory (ROM), a Random Access Memory (RAM), a Flash Memory, a Hard Disk Drive (HDD) or a Solid-State Drive (SSD) and so on; the storage medium may also comprise a combination of the above-mentioned kinds of memories.

It should be noted that the relational terms such as "first" and "second" are only used to distinguish one entity or operation from another entity or operation, and do not necessarily require or imply that there is any such actual relationship or order among these entities or operations herein. Moreover, the terms "comprise", "include" or any other variation thereof are intended to cover non-exclusive inclusion, so that a process, method, article or device comprising a series of elements not only comprises those elements, but also comprises other elements not explicitly listed or further comprises elements inherent to such process, method, article or device. Without more restriction, an element defined by the phrase "comprising a/an ... " does not exclude that there are other identical elements in the process, method, article or equipment comprising the element.

The above only describes specific exemplary implementation ways of the present application, so that those skilled in the art can understand or realize the present application. Many modifications to these embodiments will be obvious to those skilled in the art, and the general principles defined herein can be realized in other embodiments without departing from the spirit or scope of the present application. Therefore, the present application will not be limited to the embodiments shown herein, but is to be accorded the widest scope consistent with the principles and novel features applied herein.

## Claims

1. A parallel offshore wind power direct-current transmission system, **characterized in** comprising: an onshore power grid, an onshore converter station, an offshore converter station and an offshore wind farm; wherein
the onshore power grid is connected with the onshore converter station;
the onshore converter station is connected with the offshore converter station, and the offshore converter station comprises an offshore auxiliary flexible direct-current converter valve and a diode valve which is connected in parallel with the offshore auxiliary flexible direct-current converter valve; a first bypass switch is connected between the offshore auxiliary flexible direct-current converter valve and one terminal of a direct-current side of the diode valve; a second bypass switch is connected between the offshore auxiliary flexible direct-current converter valve and the other terminal of the direct-current side of the diode valve;
the offshore auxiliary flexible direct-current converter valve and the diode valve are respectively connected with the offshore wind farm.

2. The system according to claim 1, **characterized in that** the onshore converter station comprises a starting transformer, an onshore flexible direct-current converter valve and an operating transformer;
the onshore power grid is connected with the onshore flexible direct-current converter valve through a first circuit breaker, the starting transformer and a second circuit breaker in sequence;
the onshore power grid is connected with the onshore flexible direct-current converter valve through a third circuit breaker, the operating transformer and a fourth circuit breaker;
the onshore flexible direct-current converter valve is connected with the offshore converter station through a direct-current undersea cable.

3. The system according to claim 2, **characterized in that** a fifth circuit breaker is connected between one terminal of the direct-current undersea cable and the diode valve, and a sixth circuit breaker is connected between the other terminal of the direct-current undersea cable and the diode valve.

4. The system according to claim 3, **characterized in that** the offshore converter station further comprises a first transformer and a second transformer;
the diode valve is connected with a point of common coupling of the offshore wind farm through the first transformer and a seventh circuit breaker in sequence;
the offshore auxiliary flexible direct-current converter valve is connected with the point of common coupling through an eighth circuit breaker, the second transformer and a ninth circuit breaker in sequence.

5. The system according to claim 4, **characterized in that** the system further comprises a network-forming power supply unit, which comprises a storage battery, a converter and a third transformer;
the network-forming power supply unit is configured to provide a network-forming voltage for the point of common coupling;
the storage battery is connected with the point of common coupling through the converter, a tenth circuit breaker, the third transformer and an eleventh circuit breaker in sequence.

6. A starting control method for a parallel offshore wind power direct-current transmission system, **characterized in that**, the method is implemented by the parallel offshore wind power direct-current transmission system according to claim 1, and the method comprises:
controlling the onshore power grid to supply power to the offshore wind farm through the onshore converter station and the offshore auxiliary flexible direct-current converter valve of the offshore converter station, so as to start the offshore wind farm;
controlling an output power from the offshore wind farm to the offshore converter station until a current value passing through the first bypass switch and the second bypass switch is reduced to a preset current value, and turning off the first bypass switch and the second bypass switch;
setting the diode valve in the offshore converter station into a conducting state to complete the starting of the parallel offshore wind power direct-current transmission system.

7. The method according to claim 6, **characterized in that** the onshore converter station comprises a starting transformer, an onshore flexible direct-current converter valve and an operating transformer; the onshore power grid is connected with the onshore flexible direct-current converter valve through a first circuit breaker, the starting transformer and a second circuit breaker in sequence; the onshore power grid is connected with the onshore flexible direct-current converter valve through a third circuit breaker, the operating transformer and a fourth circuit breaker; the onshore flexible direct-current converter valve is connected with the offshore converter station through a direct-current undersea cable; a fifth circuit breaker is connected between one terminal of the direct-current undersea cable and the diode valve, and a sixth circuit breaker is connected between the other terminal of the direct-current undersea cable and the diode valve; the offshore converter station further comprises a first transformer and a second transformer; the diode valve is connected with a point of common coupling of the offshore wind farm through the first transformer and a seventh circuit breaker in sequence; the offshore auxiliary flexible direct-current converter valve is connected with the point of common coupling through an eighth circuit breaker, the second transformer and a ninth circuit breaker in sequence;
the step of controlling the onshore power grid to supply power to the offshore wind farm through the onshore converter station and the offshore auxiliary flexible direct-current converter valve of the offshore converter station, so as to start the offshore wind farm, comprises:
closing the first circuit breaker, the second circuit breaker, the first bypass switch and the second bypass switch, so that the onshore power grid charges the onshore flexible direct-current converter valve through the starting transformer, and at the same time, the onshore power grid charges the offshore auxiliary flexible direct-current converter valve in the offshore converter station through the onshore flexible direct-current converter valve, until the onshore flexible direct-current converter valve and the offshore auxiliary flexible direct-current converter valve finish charging;
unlocking the onshore flexible direct-current converter valve, and setting the direct-current voltage value of the onshore flexible direct-current converter valve to be at a preset direct-current voltage value, and setting a reactive power value of the onshore flexible direct-current converter valve to be at a preset reactive power value;
closing the seventh circuit breaker, the eighth circuit breaker and the ninth circuit breaker, unlocking the offshore auxiliary flexible direct-current converter valve, controlling the offshore auxiliary flexible direct-current converter valve to boost the voltage value of the point of common coupling to reach a preset point-of-common-coupling voltage value by starting from zero, thereby starting a preset number of wind turbines in the offshore wind farm.

8. The method according to claim 7, **characterized in that** the step of controlling the output power from the offshore wind farm to the offshore converter station until the current value passing through the first bypass switch and the second bypass switch is reduced to a preset current value, and turning off the first bypass switch and the second bypass switch, comprises:
controlling the offshore auxiliary flexible direct-current converter valve to reduce the voltage value of the point of common coupling, and making the offshore wind farm enter a controllable energy consumption mode after detecting a decrease of the voltage value of the point of common coupling, so as to control the output power from the offshore wind farm to the offshore converter station until the current value passing through the first bypass switch and the second bypass switch is reduced to a preset current value, and then turning off the first bypass switch and the second bypass switch.

9. The method according to claim 7, **characterized in that** the step of controlling the output power from the offshore wind farm to the offshore converter station until the current value passing through the first bypass switch and the second bypass switch is reduced to a preset current value, and turning off the first bypass switch and the second bypass switch, comprises:
controlling the offshore auxiliary flexible direct-current converter valve to reduce the voltage value of the point of common coupling, and carrying out constant power control on a preset number of wind turbines to reduce the output power from the offshore wind farm to the offshore converter station until the current value passing through the first bypass switch and the second bypass switch is reduced to a preset current value, and then turning off the first bypass switch and the second bypass switch.

10. The method according to claim 7, **characterized in that** the system further comprises a network-forming power supply unit, which comprises a storage battery, a converter and a third transformer;
the network-forming power supply unit is configured to provide a network-forming voltage for the point of common coupling;
the storage battery is connected with the point of common coupling through the converter, a tenth circuit breaker, the third transformer and an eleventh circuit breaker in sequence;
the step of controlling the output power from the offshore wind farm to the offshore converter station until the current value passing through the first bypass switch and the second bypass switch is reduced to a preset current value, and turning off the first bypass switch and the second bypass switch, comprises:
controlling the network-forming power supply unit to reduce the output power from the offshore wind farm to the offshore converter station, then controlling the offshore auxiliary flexible direct-current converter valve to be in no-load operating condition, and turning off the first bypass switch and the second bypass switch.

11. The method according to claim 8, **characterized in that** the step of setting the diode valve in the offshore converter station into a conducting state to complete the starting of the parallel offshore wind power direct-current transmission system comprises:
after controlling the direct-current voltage value of the onshore flexible direct-current converter valve to increase to a rated direct-current voltage value, turning off the first circuit breaker and the second circuit breaker, and closing the third circuit breaker and the fourth circuit breaker;
closing the fifth circuit breaker and the sixth circuit breaker, controlling the offshore auxiliary flexible direct-current converter valve to increase the voltage value of the point of common coupling to reach a rated alternating-current voltage value, so that the diode valve turns into a conducting state;
controlling the offshore wind farm to exit the controllable energy consumption mode, and controlling the offshore auxiliary flexible direct-current converter valve to have a direct-current voltage value that is constant and a Q-axis voltage value that is zero, so as to complete the starting of the parallel offshore wind power direct-current transmission system.

12. The method according to claim 9, **characterized in that** the step of setting the diode valve in the offshore converter station into a conducting state to complete the starting of the parallel offshore wind power direct-current transmission system comprises:
after controlling the direct-current voltage value of the onshore flexible direct-current converter valve to increase to a rated direct-current voltage value, turning off the first circuit breaker and the second circuit breaker, and closing the third circuit breaker and the fourth circuit breaker;
closing the fifth circuit breaker and the sixth circuit breaker, controlling the offshore auxiliary flexible direct-current converter valve to increase the voltage value of the point of common coupling to reach a rated alternating-current voltage value, so that the diode valve turns into a conducting state;
controlling the offshore auxiliary flexible direct-current converter valve to have a direct-current voltage value that is constant and a Q-axis voltage value that is zero, so as to complete the starting of the parallel offshore wind power direct-current transmission system.

13. The method according to claim 10, **characterized in that** the step of setting the diode valve in the offshore converter station into a conducting state to complete the starting of the parallel offshore wind power direct-current transmission system comprises:
after controlling the direct-current voltage value of the onshore flexible direct converter valve to increase to a rated direct-current voltage value, turning off the first circuit breaker and the second circuit breaker, and closing the third circuit breaker and the fourth circuit breaker;
closing the fifth circuit breaker and the sixth circuit breaker, controlling the network-forming power supply unit to increase the voltage value of the point of common coupling to reach a rated alternating-current voltage value, so that the diode valve turns into a conducting state;
controlling the offshore auxiliary flexible direct-current converter valve to have a direct-current voltage value that is constant and a Q-axis voltage value that is zero, and the network-forming power supply unit exits the network-forming operation mode, so as to complete the starting of the parallel offshore wind power direct-current transmission system.

14. A starting control apparatus for a parallel offshore wind power direct-current transmission system, **characterized in that**, the apparatus is implemented by the parallel offshore wind power direct-current transmission system according to claim 1, and the apparatus comprises:
a first control module, configured to control the onshore power grid to supply power to the offshore wind farm through the onshore converter station and the offshore auxiliary flexible direct-current converter valve of the offshore converter station, so as to start the offshore wind farm;
a second control module, configured to control the output power from the offshore wind farm to the offshore converter station until the current value passing through the first bypass switch and the second bypass switch is reduced to a preset current value, and turn off the first bypass switch and the second bypass switch;
a conduction module, configured to set the diode valve in the offshore converter station into a conducting state to complete the starting of the parallel offshore wind power direct-current transmission system.

15. A computer device, **characterized in** comprising a memory and a processor, wherein the memory and the processor are in communication connection with each other, the memory has computer instructions stored therein, and the processor is configured to execute the computer instructions to implement the steps of the starting control method according to any one of claims 6 to 13 for a parallel offshore wind power direct-current transmission system.
